# EUROPÄISCHE PATENTANMELDUNG

(11) **EP 2 527 730 A1**
(43) Veröffentlichungstag der Anmeldung: **28.11.2012**
(21) Anmeldenummer: 12004007.6
(22) Anmeldetag: 22.05.2012
(51) Int. Cl.: F21V 29/00

(54) **Leuchtdioden-Leuchtmittel**

(30) Priorität: 23.05.2011 DE 202011101257 U
(71) Anmelder: Promotec GmbH, 80801 München (DE)
(72) Erfinder: Lommerzheim, Robert, 80801 München (DE)
(74) Vertreter: Fiener, Josef

(57) **Zusammenfassung**

Zur Schaffung eines kostengünstigen Leuchtdioden-Leuchtmittels (1) mit mindestens einem Diodenträger (2) und wenigstens einer daran angeordneten Leuchtdiode (3), die von einer transparenten Abdeckung (4) über einem Lampensockel (1) umgeben ist, wobei sich an den Diodenträger (2) zur Wärmeableitung ein Kühlkörper (5) anschließt, wird vorgeschlagen, dass der Kühlkörper (5) aus Metallwolle gebildet ist, die den Lampensockel (1) weitgehend ausfüllt..

## Beschreibung

Die Erfindung betrifft ein Leuchtdioden-Leuchtmittel, insbesondere als Ersatz für herkömmliche Leuchtmittel, wie Glühlampen oder sog. Strahler (Spots).

Derartige LED-Lampen sind als Ersatz für herkömmliche Glühlampen bereits bekannt, insbesondere bei Kraftfahrzeugen. Bei Leuchtdiodenlampen wird Licht durch eine oder mehrere Leuchtdioden (LED) erzeugt, die auf einem Diodenträger angeordnet sind, der für die elektrische Versorgung der LED und die Wärmeabfuhr sorgen soll. Zunehmend werden leistungsfähige Leuchtdioden eingesetzt, die mit einem hohen Wirkungsgrad eine hohe Lichtausbeute ermöglichen, aber auch erhebliche Wärme von 120°C und mehr erzeugen. So wurden z. B. in der DE 102 60 432 oder DE 102 13 042 bereits Leuchtdioden vorgeschlagen, die von einer Kühlflüssigkeit umgeben oder umspült sind. Dies bringt jedoch einen erheblichen Bauaufwand mit sich, was bei 4 Watt-LED-Lampen (entsprechend einer 30 - 60 Watt-Glühlampe) zu Preisen von 30 Euro und mehr für eine LED-Lampe führt. Dies wird vom Konsumenten kaum akzeptiert, so dass oft noch herkömmliche Glühlampen oder Leuchtstoffröhren eingesetzt werden. Erstere werden jedoch zunehmend verboten, während letztere oft mit Schwermetallen belastet sind. Zudem besteht bei flüssigkeitsgekühlten LEDs die Gefahr, dass Kühlflüssigkeit ausläuft, wenn an der Umhüllung ein Leck auftritt. Weiterhin können derartige Kühlflüssigkeiten bei der Entsorgung problematisch sein. Das Problem der mangelnden Kundenakzeptanz beruht auch auf groß dimensionierten, gegossenen oder stranggepressten Alu-Kühlkörpern mit radial abspreizenden Flügeln, Lamellen, Stacheln oder Stiften. Dieses "igetartige" Erscheinungsbild ist beim Kunden unerwünscht und kann durch die scharfen Kanten sogar zu Verletzungen führen. Zudem ist der Materialbedarf bei derartigen Kühlkörpern sehr hoch, insbesondere an relativ teuren Leichtmetallen.

Aufgabe der Erfindung ist es daher, ein preisgünstiges Leuchtdioden-Leuchtmittel zu schaffen, das insbesondere als Ersatz für herkömmliche Leuchtmittel dient.

Diese Aufgabe wird durch die Merkmale des Anspruchs 1 gelöst. Vorteilhafte Ausgestaltungen der Erfindung sind Gegenstand der Unteransprüche.

Somit wird ein Leuchtdioden-Leuchtmittel bereitgestellt, bei dem der Kühlkörper aus einfacher und preisgünstiger Metallwolle gebildet ist, die den Lampensockelbereich ausfüllt und damit eine große, wärmeabgebende Gesamtoberfläche bildet. Die Filamente der Metallwolle liegen hierbei an vielen Tausenden Kontaktpunkten aneinander an, so dass die Wärmeableitung besonders effektiv ist, und bilden dennoch Abertausende Konvektionskanäle, durch die Luft strömen kann. Die Konvektionskanäle sind jedoch in ihrem Querschnitt so klein, dass keine Staubablagerung zu befürchten ist. Dabei ist auch eine Anordnung mehrerer Leuchtdioden als flächige Anordnung auf einem plattenförmigen Diodenträger möglich, wobei als Abdeckung eine Halbkugelschale ähnlich dem Glaskolben einer herkömmlichen Glühbirne vorgesehen sein kann, um das gewohnte Erscheinungsbild beizubehalten. Das von den Leuchtdioden abgegebene Licht kann durch eine lichtstreuende Beschichtung allseitig abstrahlt werden. Die einzelnen Leuchtdioden der LED-Lampe strahlen das Licht typischerweise mit in einem Winkelbereich von 140 ° ab, so dass zusammen mit der lichtstreuenden Beschichtung der transparenten Abdeckung die erfindungsgemäße LED-Lampe ähnlich einer herkömmlichen Glühlampe (mit sog. E27-Sockel) Licht gleichmäßig abgibt. Die Form des Lampensockels ist ebenfalls hieran angepasst, so dass die Kundenakzeptanz erhöht wird. Da jedoch kein heißer Glühfaden vorhanden ist, erfolgt keine Wärmebelastung der Abdeckung, so dass diese aus preisgünstigem Kunststoff bestehen kann. Somit kann die LED-Lampe mit einem entsprechenden Einschraubsockel in eine übliche Glühlampenfassung eingeschraubt werden. Selbstverständlich ist auch die Ausführung mit einem GU10-Sockel, in Kerzenform mit E14-Sockel oder anderen Sockelformen wie G24 möglich. Dabei ist vorteilhaft, dass die Metallwolle des Kühlkörpers in einer perforierten Umhüllung aufgenommen ist, deren Außenform im Lampensockelbereich einer Glühbirne oder einem Strahler angepasst ist, wobei die Umhüllung in den oberen und unteren Endbereichen Konvektionsöffnungen aufweist oder als Lochblech ausgebildet ist, um eine gute Wärmeableitung zu gewährleisten.

Die Metallwolle des Kühlkörpers kann bevorzugt verdichtet sein, insbesondere auf einen Metall-Volumenanteil von ca. 10% des Lampensockelvolumens, wobei davon ausgegangen wird, dass Stahlwolle im Ausgangsstadium einen Metallanteil von etwa 5% eines ausgefüllten Volumens besitzt. Durch die Kompaktierung ergeben sich zwischen den Filamenten der Metallwolle (ggf. mit Unterstützung eines Klebers oder eines Lötmittels) mehr Kontaktpunkte und eine gleichmäßigere Wärmeableitung. Die Metallwolle des Kühlkörpers kann auch zu einem formstabilen, luftdurchlässigen Körper verpresst ist, der unmittelbar mit dem Schraubsockel verbunden ist. Dabei wird eine Umhüllung eingespart, wobei der Formkörper in Anpassung an übliche Lampen z. B. weiß lackiert sein kann, jedoch noch eine Vielzahl von feinen Konvektionsöffnungen verbleiben. Die Konvektionsöffnungen ist dabei so klein, dass keine Feuchtigkeit eindringen kann, so dass diese LED-Lampen auch für die Außenbeleuchtung geeignet sind. Die Metallwolle des Kühlkörpers besteht hauptsächlich aus Aluminium- und/oder Kupferspänen, wobei jedoch auch Stahlwolle oder andere Metallwolle zum Einsatz gelangen kann. Bevorzugt stammt diese Metallwolle aus der Drehbearbeitung von Metallteilen, insbesondere dem Feindrehen, da hierbei die Filamente nur einige Hundertstel oder Zehntel Millimeter stark sind und relativ hierzu große Längen auaufweist. Zur elektrischen Sicherheit ist der Diodenträger mit seinen elektrischen bzw. elektronischen Bauteilen gekapselt ausgeführt und bevorzugt in einer eingeformten Vertiefung der Metallwolle des Kühlkörpers eingesetzt ist. Hierdurch ist der Wärmeübergang vom "heißen" Diodenträger auf die umgebende Metallwolle besonders effektiv, ggf. auch noch durch Unterstützung einer Wärmeleitpaste.

Zur weiteren Erläuterung der Erfindung sind zwei Ausführungsbeispiele eines Leuchtdioden-Leuchtmittels in der Zeichnung schematisch dargestellt. Hierbei zeigt:
Fig. 1 einen schematischen Längsschnitt durch eine LED-Lampe nach der Erfindung, und
Fig. 2 einen schematischen Längsschnitt durch eine LED-Lampe bzw. Leuchtmittel nach der Erfindung.

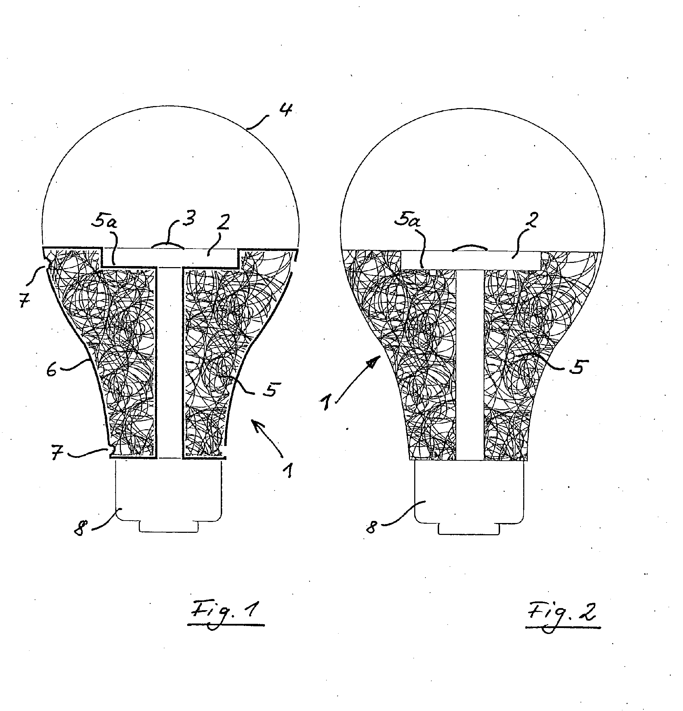

Fig. 1 zeigt einen schematischen Längsschnitt durch ein Leuchtdioden-Leuchtmittel (auch LED-Lampe genannt) nach der Erfindung mit einer Außenform ähnlich einer herkömmlichen Glühbirne. Ein Lampensockel 1 enthält einen Diodenträger 2 (in Form einer.Platine) mit wenigstens einer Leuchtdiode 3 (oder einer flächigen LED 3, die mehrere Leuchtdioden umfasst). Die Leuchtdiode 2 ist hier nach oben hin mit einer transparenten Abdeckung 4 in Form einer Halbkugelschale abgedeckt, die an ihrer Innenseite eine lichtstreuende Beschichtung aufweisen kann. Der Diodenträger 2 ist zu einem üblichen Schraubsockel 8 hin (hier nach unten) wärmeleitend mit einem Kühlkörper 5 aus Metallwolle im Lampensockel 1 verbunden, um die im Betrieb erzeugte Wärme abzuleiten. Wie ersichtlich füllt der Kühlkörper 5 aus Metallwolle den Lampensockel 1 weitgehend aus, wobei der Diodenträger 2 in eine Vertiefung 5a eingesetzt ist, um seine Wärme möglichst breitflächig an die Metallwolle abzugeben. Die Metallwolle des Kühlkörpers 5, der nur von einer stabförmigen Stromzuführung (ggf. mit LED-Steuerungs- und Treiberbauteilen) zum Schraubsockel 8 hin zentral durchdrungen wird, ist hier in einer Umhüllung 6 eingefüllt und ggf. verdichtet, deren Außenform im Lampensockelbereich einer Glühbirne angepasst ist. Diese Umhüllung 6, bevorzugt aus Kunststoff, weist in den hier oberen und unteren Endbereichen mehrere Konvektionsöffnungen 7 auf, kann aber auch durchgehend perforiert sein.

Fig. 2 zeigt einen schematischen Längsschnitt durch eine LED-Lampe, wobei die Metallwolle des Kühlkörpers 5 noch stärker verpresst ist, insbesondere auf einen Metall-Volumenanteil von ca. 20% des Lampensockelvolumens. Die Metallwolle des Kühlkörpers 5 wird somit zu einem formstabilen, luftdurchlässigen Körper verpresst, der unmittelbar mit dem Schraubsockel 8 verbunden ist. Die Umhüllung kann somit entfallen und die Außenseite des Kühlkörpers 5 hierbei auch lackiert sein, wobei jedoch Tausende feiner Öffnungen frei bleiben, um die Konvektion der Umgebungsluft durch die Metallwolle hindurch zu gewährleisten. Die Metallwolle des Kühlkörpers 5 besteht hauptsächlich aus Aluminium-und/oder Kupferspänen, wie diese bei.der Drehbearbeitung von Metallteilen in großen Mengen anfallen. Es kann aber auch Messing- oder Bronzewolle eingesetzt werden oder auch Stahlwolle. Da es sich um Abfallstoff aus der Metallbearbeitung (Drehspäne aus der Feinbearbeitung) handelt, ist das ansonsten wieder eingeschmolzene Ausgangsmaterial besonders günstig zu erhalten und daher besonders ressourcenschonend.

Wie aus Fig. 1 und 2 ersichtlich ist der Diodenträger 2 mit seinen elektrischen/elektronischen Bauteilen gekapselt und in einer Vertiefung 5a der entsprechend kompaktierten Metallwolle des Kühlkörpers 5 eingesetzt. Somit ist die elektrische Sicherheit gegeben, wobei der Wärmeübergang ggf. durch eine Wärmeleitpaste unterstützt werden kann. Selbst wenn die Metallwolle stark verpresst,wird, verbleiben eine Vielzahl von Konvektionskanälen, oder anders ausgedrückt, der Metallanteil des Kühlkörpers ist relativ gering im Vergleich zu gegossenen oder stranggepressten Kühlkörpern (Heatsinks). Somit ist bei verbesserter Kühlleistung der Materialeinsatz minimiert, wie dies insbesondere für Massenprodukte erwünscht wird.

## Patentansprüche

1. Leuchtdioden-Leuchtmittel mit mindestens einem Diodenträger (2) und wenigstens einer daran angeordneten Leuchtdiode (3), die von einer transparenten Abdeckung (4) über einem Lampensockel (1) umgeben ist, wobei sich an den Diodenträger (2) zur Wärmeableitung ein Kühlkörper (5) anschließt, **dadurch gekennzeichnet, dass**
der Kühlkörper (5) aus Metallwolle gebildet ist, die den Lampensockel (1) weitgehend ausfüllt..

2. Leuchtdioden-Leuchtmittel nach Anspruch 1, **dadurch gekennzeichnet, dass** die transparente Abdeckung (4) als Halbkugelschale in Form einer Glühbirne ausgebildet ist und insbesondere mit einer lichtstreuenden Beschichtung versehen ist.

3. Leuchtdioden-Leuchtmittel nach Anspruch 1 oder 2, **dadurch gekennzeichnet, dass** die Metallwolle des Kühlkörpers (5) in einer perforierten Umhüllung (6) aufgenommen ist.

4. Leuchtdioden-Leuchtmittel .nach Anspruch 3, **dadurch gekennzeichnet, dass** die Umhüllung (6) Konvektionsöffnungen (7) aufweist, insbesondere in den Endbereichen.

5. Leuchtdioden-Leuchtmittel nach einem der Ansprüche 1 bis 4, **dadurch gekennzeichnet, dass** die Metallwolle des Kühlkörpers (5) verdichtet ist, insbesondere auf einen Metall-Volumenanteil von ca. 10% oder mehr des Volumens des Lampensockels (1).

6. Leuchtdioden-Leuchtmittel nach Anspruch 5, **dadurch gekennzeichnet, dass** die Metallwolle des Kühlkörpers (5) zu einem formstabilen, luftdurchlässigen Körper verpresst ist, der unmittelbar mit dem Schraubsockel (8) verbunden ist.

7. Leuchtdioden-Leuchtmittel nach einem der Ansprüche 1 bis 6, **dadurch gekennzeichnet, dass** die Metallwolle des Kühlkörpers (5) hauptsächlich aus Aluminium, Stahl und/oder Kupfer oder darauf basierenden Legierungen besteht, insbesondere in Filament- oder Spanform aus der Metallbearbeitung.

8. Leuchtdioden-Leuchtmittel nach einem der Ansprüche 1 bis 7, **dadurch gekennzeichnet, dass** der Diodenträger (2) mit seinen elektrischen/elektronischen Bauteilen gekapselt ist und in einer Vertiefung (5a) der Metallwolle des Kühlkörpers (5) eingesetzt ist.
